# FASCICULE DE BREVET EUROPEEN

(11) **EP 4 456 850 B1**
(45) Date de publication et mention de la délivrance du brevet: **03.12.2025**
(21) Numéro de dépôt: 22840153.5
(22) Date de dépôt: 19.12.2022
(51) Int. Cl.: A61G 5/04, A61G 5/06, B62D 61/00, A61G 5/10

(54) **DISPOSITIF DE FRANCHISSEMENT AMELIORÉ POUR FAUTEUIL ROULANT ÉLECTRIQUE**
VERBESSERTE HINDERNISQUERUNGSVORRICHTUNG FÜR EINEN ELEKTRISCHEN ROLLSTUHL
IMPROVED OBSTACLE-CROSSING DEVICE FOR AN ELECTRIC WHEELCHAIR

(30) Priorité: 29.12.2021 FR 2114602; 15.07.2022 FR 2207286
(43) Date de publication de la demande: 06.11.2024
(73) Titulaire: NEW LIVE INGENIERIE, 67660 Betschdorf (FR)
(72) Inventeur: OHRUH, Michel, Betschdorf 67660 (FR)
(74) Mandataire: Cabinet Bleger-Rhein-Poupon
(86) Numéro de dépôt international: PCT/EP2022/086756
(87) Numéro de publication internationale: WO 2023/126240

(56) Documents cités:
- WO-A1-2011/095753
- US-A- 4 840 394
- US-A- 5 076 378

## Description

La présente invention concerne un dispositif de franchissement d'obstacle pour engin motorisé.

Par engin motorisé, on entend tout engin ayant pour vocation de se déplacer de façon autonome, du type robot, fauteuil roulant, ...

A titre d'exemple qui constituera le fil conducteur de la présente description, l'engin motorisé concernera plus particulièrement un fauteuil roulant.

Ce dispositif de franchissement d'obstacle répond à des problématiques actuelles relatives au déplacement des personnes à mobilité réduite (handicapées ou âgées) ayant un usage d'un fauteuil roulant au quotidien tant en intérieur qu'en extérieur.

Dans la société actuelle, la prise en compte des personnes en situation de handicap constitue un axe prioritaire dans les projets d'urbanisme, dans l'adaptabilité des logements, dans l'accès à la voirie et aux transports publics ou privés.

Une bonne accessibilité conditionne l'insertion sociale, éducative et professionnelle. La mobilité et les déplacements constituent le gage de la qualité de vie au quotidien et à long terme.

Pour que la liberté de déplacement soit réelle, la totalité de la chaîne de déplacement doit répondre aux besoins spécifiques des personnes.

Le premier élément de cette chaîne de déplacement est incontestablement le fauteuil roulant qui constitue une aide technique à la mobilité en permettant de transporter sans peine une personne sur une surface plane.

Les projets d'urbanisme étant longs à mettre en œuvre, de l'ordre de quelques années, le fauteuil roulant doit s'adapter à l'état actuel des villes, des voiries, des logements...

Or, les voiries présentent de nombreux trottoirs, les commerces présentent souvent un marchepied, les logements présentent parfois une différence de niveau d'une pièce à l'autre, etc. Un fauteuil roulant doit être capable de franchir ces obstacles.

De nombreuses solutions ont été proposées à cet effet. Parmi elles, des fauteuils roulants ayant une technologie six roues existent sur le marché. Elles présentent une bonne manœuvrabilité et une bonne stabilité, mais le franchissement d'obstacles est limité à de faibles hauteurs (inférieures à 7,5cm) et ceci uniquement avec une option monte trottoir qui fait effet de levier pour soulever les roues avant.

D'autres fauteuils roulants de type 4x4 existent et permettent de rouler sur tout type de terrain (herbe, gravier, cailloux) et de franchir des obstacles jusqu'à 15cm. Le principal inconvénient de ces fauteuils réside d'une part dans leur gabarit imposant empêchant leur utilisation en intérieur et d'autre part dans leur manque de stabilité, car il existe un risque de basculement vers l'avant ou vers l'arrière lors du franchissement d'obstacle.

On connait, en particulier, de la demande internationale publiée sous le numéro WO 2011/095753 un dispositif de franchissement d'obstacle pour engin motorisé constitué :
- d'un châssis relié à trois roues de chaque côté latéral ;
- de moyens moteurs aptes à faire tourner les roues ;
et, de chaque côté latéral du châssis, se trouve un mécanisme comportant deux bras, articulés deux à deux autour d'un axe de pivotement commun, sur lesquels sont réparties les trois roues, respectivement une roue avant, une roue intermédiaire, et une roue arrière, ledit mécanisme permettant à chaque roue de pivoter par rapport à l'axe de chaque roue adjacente.

Ledit dispositif est particulier en ce que le châssis est relié à chaque mécanisme à bras articulés par l'intermédiaire de deux arbres montés libre en rotation, au moins l'un des arbres étant apte à compenser la variation de distance entre ces deux arbres lorsque les bras ne sont pas alignés.

En d'autres termes, ce dispositif présente la particularité suivante : la distance entre deux roues adjacentes est toujours fixe afin d'éviter tout tamponnement entre elles. Les roues peuvent se déplacer en hauteur indépendamment les unes des autres lorsqu'elles rencontrent un obstacle. Concrètement, quand le fauteuil se retrouve face à un trottoir, les deux roues avant vont le franchir en premier, tandis que les deux autres roues resteront en contact avec le sol. Puis les deux roues suivantes arriveront face au trottoir et le franchiront, les autres roues restant en contact avec le sol. Finalement, les deux roues arrière franchiront le trottoir, les roues de devant restant posées au sol. À tout moment, le fauteuil a plus de trois points d'appui de manière à définir un plan qui confère une stabilité au fauteuil.

Comme déjà évoqué, dans le dispositif décrit dans ce document WO 2011/095753 le châssis est relié à chaque mécanisme à bras articulés par l'intermédiaire de deux arbres montés libre en rotation, au moins l'un des arbres étant apte à compenser la variation de distance entre ces deux arbres lorsque les bras ne sont pas alignés dans un plan horizontal. En effet, lors du franchissement d'un obstacle, les roues ne sont pas alignées, et les bras articulés pivotent en conséquence, formant ainsi un angle, aboutissant à un rapprochement des deux arbres. Or, le châssis du fauteuil a des dimensions fixes et est relié à ces deux arbres. Pour éviter toute déformation, voire rupture, du châssis, il est donc indispensable de pouvoir compenser la modification de l'entraxe des arbres de fixation des bras articulés par rapport à l'entraxe de fixation de ces mêmes arbres au châssis, lors du franchissement d'obstacles.

De manière générale, un tel dispositif présente l'avantage de pouvoir proposer aux personnes à mobilité réduite un fauteuil électrique compact pour faciliter leurs déplacements quotidiens, ledit fauteuil étant notamment apte à capable de franchir des obstacles jusqu'à 20 cm de hauteur et ce dans tous les angles d'attaque vers l'avant, sans risque de basculement, rendant ainsi la conduite plus aisée notamment pour les utilisateurs ayant du mal à appréhender les petits obstacles.

En effet, en particulier, le fauteuil décrit dans la demande internationale WO 2011/095753 peut être avantageusement muni d'un dispositif anti-basculement avant et/ou arrière comprenant, de chaque côté latéral de l'engin, des moyens de blocage du pivotement d'au moins un bras articulé lors du basculement du châssis vers l'avant ou vers l'arrière.

En outre, ce fauteuil peut également être complété par un dispositif d'aide au franchissement de l'arrière de l'engin, comportant de chaque côté latéral de l'engin, une roulette anti-bascule placée à l'arrière de l'engin.

Un autre avantage de ce fauteuil réside dans le fait qu'il permet de circuler à la campagne dans l'herbe, le gravier, les cailloux, mais aussi dans la neige et dans le sable.

Toutefois, un tel dispositif d'aide de franchissement d'obstacle pour engin motorisé peut encore être amélioré.

En particulier, des améliorations doivent être apportées notamment pour éviter les chocs et pour mieux épouser les irrégularités du sol. Il est notamment recherché une amélioration du contact, de l'appui, entre les roues, notamment les roues avant et arrière, et le sol, dans le cas d'un franchissement d'obstacle, par exemple la montée ou la descente d'un trottoir.

Pour répondre à ces problématiques, et forcer le dispositif à épouser de manière optimale les dénivelés du sol, il a été imaginé de doter le dispositif de franchissement d'un système de rappel qui permet de venir plaquer les roues avant et arrière au niveau du sol, autrement dit de forcer le dispositif à faire un angle afin que ladite roue avant ou arrière soit, quant à elle, forcée à venir en contact avec le sol.

A noter que, par ailleurs, un tel dispositif permet également une amélioration de la motricité de la roue avant dans le cas particulier de la montée d'un obstacle et de faciliter le franchissement de l'arrière du fauteuil en soulevant la roue arrière avant qu'elle ne tape contre l'obstacle.

A cet effet, la présente invention est plus particulièrement relative à un dispositif de franchissement d'obstacle pour engin motorisé constitué d'un châssis relié à trois roues de chaque côté latéral dudit châssis et de moyens moteurs aptes à faire tourner lesdites roues et, de chaque côté latéral du châssis, se trouve un mécanisme comportant deux bras, articulés deux à deux autour d'un axe de pivotement commun, sur lesquels deux bras sont réparties les trois roues, respectivement une roue avant, une roue intermédiaire et une roue arrière, ledit mécanisme permettant à chaque roue de pivoter par rapport à l'axe de chaque roue adjacente.

Ledit dispositif de franchissement d'obstacle selon l'invention est particulier en ce que les moyens moteurs et la roue arrière sont portés par un bras articulé au châssis sur un longeron, au travers d'une liaison pivot, l'extrémité du bras qui s'étend au-delà de la liaison pivot et du côté opposé à la solidarisation des moyens moteurs coopérant avec une coulisse mobile sur le longeron, ladite liaison pivot générant un déplacement de la roue arrière entre deux positions extrêmes, à savoir une première position dans l'alignement avec les deux autres roues ou une seconde position abaissée par rapport à l'alignement des deux autres roues, ladite coulisse comportant une paroi perpendiculaire à l'axe de coulissement tandis que le longeron comporte une paroi fixe perpendiculaire à l'axe de coulissement, au moins un moyen ressort étant intercalé entre lesdites deux parois, tandis que le bras est dimensionné pour que son extrémité libre vienne au contact de la paroi en sorte de repousser la coulisse tout en contraignant le moyen ressort contre ladite paroi, lorsque ladite roue avant est dans sa première position alignée avec les deux autres roues.

Selon des modes de réalisation particulier du présent dispositif de franchissement :
- l'appui du bras sur la paroi de la coulisse se fait au travers d'un galet garnissant l'extrémité dudit bras ;
- deux moyens ressorts sont positionnés entre les parois de la coulisse ;
- les moyens moteurs et la roue arrière sont portés par le bras au travers d'une liaison pivot ;
- le dispositif comporte en outre, de chaque côté latéral, une roulette anti-bascule placée à l'arrière de l'engin motorisé et fixé à la première extrémité dudit bras opposée à l'extrémité venant au contact de la paroi de la coulisse ;
- le dispositif comporte un dispositif mécanique de limitation du mouvement du bras lors de l'élévation de l'assise, constitué d'une butée mobile sous l'action de l'élévation de l'assise ;
- ledit châssis étant relié à chaque mécanisme à bras articulés par l'intermédiaire de deux arbres montés libres en rotation, au moins l'un des deux arbres étant apte à compenser la variation de distance entre ces deux arbres lorsque les bras ne sont pas alignés.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
[Fig.1] est une vue de côté schématique montrant le fauteuil roulant à plat.
[Fig.2] montre, de manière schématique, une vue partielle du fauteuil en coupe A-A.
[Fig.3], [Fig.4], [Fig.5] et [Fig.6] représentent schématiquement une vue en coupe du dispositif d'aide au franchissement d'obstacle amélioré selon l'invention, dans différentes positions, depuis une position où les roues du fauteuil sont à plat, sur la figure 3, jusqu'à une position de franchissement d'obstacle, sur la figure 6, en passant par deux positions intermédiaires sur les figures 4 et 5, afin d'illustrer le mouvement dudit dispositif et des roues lors du franchissement d'un obstacle.

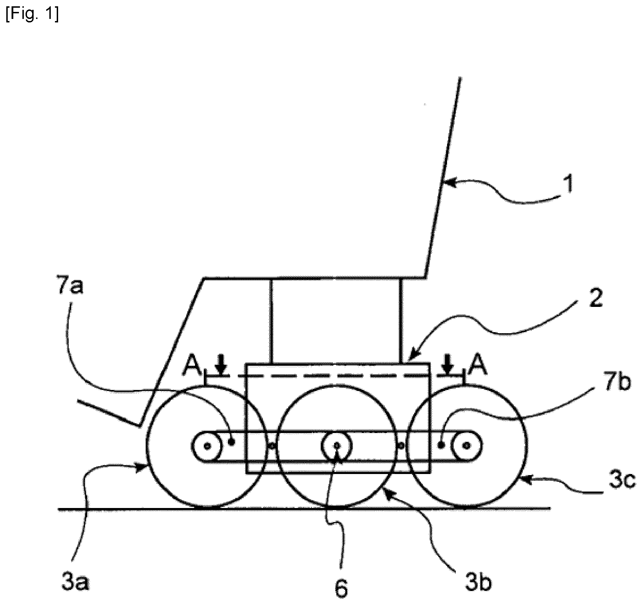

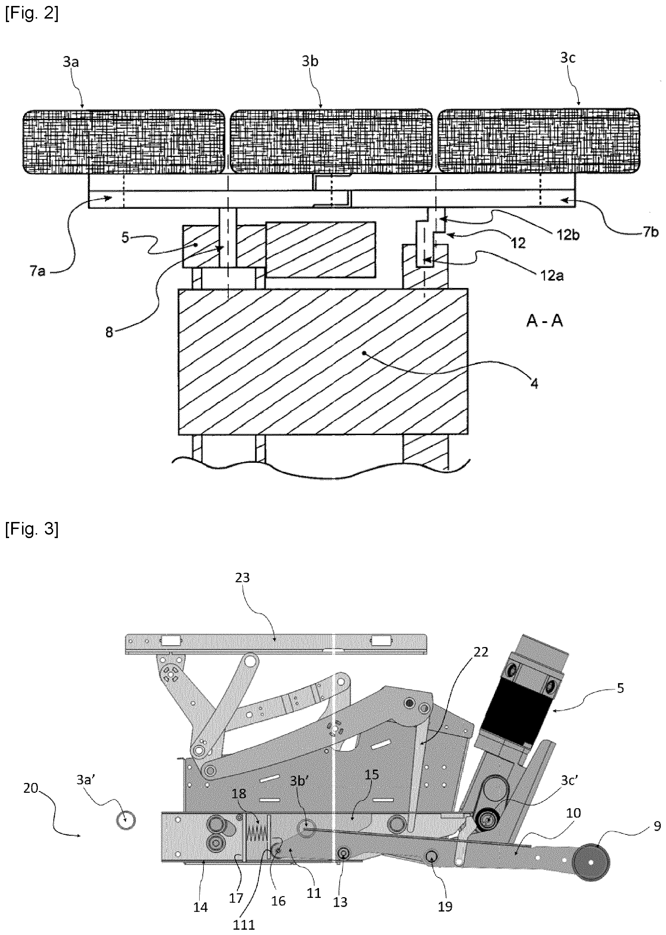

En référence aux figures 1 et 2 des dessins ci-joints, la présente invention est relative à un dispositif de franchissement d'obstacle pour engin motorisé constitué :
- d'un châssis 2 sur lequel est fixé un fauteuil 1, ledit châssis 2 étant relié à trois roues 3a, 3b, 3c de chaque côté latéral ;
- de moyens moteurs 5 aptes à faire tourner les roues 3a, 3b, 3c.

De chaque côté latéral du châssis 2, se trouve un mécanisme comportant deux bras 7a, 7b, articulés deux à deux autour d'un axe de pivotement commun 6, sur lesquels sont réparties les trois roues 3a, 3b, 3c, respectivement :
- une roue avant 3a, positionnée à l'avant du premier bras articulé 7a,
- une roue intermédiaire 3b, positionnée au niveau de l'articulation entre les deux bras 7a, 7b,
- et une roue arrière 3c, positionnée à l'arrière du second bras articulé 7b.

Les deux bras 7a, 7b sont ainsi articulés autour d'un axe commun correspondant à l'axe 6 de la roue intermédiaire 3b.

Ledit mécanisme comportant les deux bras 7a, 7b permet à chaque roue de pivoter par rapport à l'axe de chaque roue adjacente.

L'articulation entre les deux bras 7a, 7b correspond donc à une liaison pivot. Celle-ci permet aux roues avant 3a et arrière 3c de pivoter autour de l'axe 6 de la roue intermédiaire 3b. Les trois roues 3a, 3b, 3c peuvent ainsi monter et descendre indépendamment les unes des autres lors du franchissement d'un obstacle.

Selon une caractéristique avantageuse du dispositif de franchissement de l'invention, le châssis 2 du fauteuil 1 est relié à chaque mécanisme à bras articulés 7a, 7b par l'intermédiaire de deux arbres 8, 12 montés libre en rotation, au moins l'un des arbres étant apte à compenser la variation de distance entre ces deux arbres 8, 12 lorsque les bras 7a, 7b ne sont pas alignés.

Selon une première variante, cette condition peut être remplie par un arbre de type vilebrequin composé de deux tronçons cylindriques décalés l'un par rapport à l'autre. Ce décalage rattrape la variation de distance entre les deux arbres quand les roues ne sont pas alignées.

Selon une seconde variante, l'arbre de type vilebrequin peut être composé d'un premier tronçon d'arbre relié à un bras articulé et d'un second tronçon d'arbre relié au châssis, les deux tronçons d'arbres étant articulés entre eux par une bielle.

Selon une troisième variante cette condition peut être remplie par un arbre coulissant horizontal entre deux butées définissant la distance maximale et minimale autorisée entre les deux arbres. Cet arbre coulissant permet de faire varier la distance entre les deux arbres au niveau des bras articulés ou au niveau du châssis. Par exemple, cet arbre coulissant pourra s'introduire dans une fente horizontale prévue à cet effet dans un bras articulé, soit dans une fente horizontale prévue à cet effet sur le châssis.

La figure 2 dévoile une partie du système électrique situé sous l'assise du fauteuil 1. On y trouve un bloc batterie 4 relié de chaque côté latéral à l'avant du mécanisme à bras articulés 7a, 7b par l'intermédiaire d'un moteur 5 et d'un axe moteur 8, et à l'arrière du mécanisme par un axe de type vilebrequin 12 monté fou.

Le bloc batterie 4 est lui-même fixé au châssis 2 du fauteuil. L'axe du vilebrequin 12 se décompose préférentiellement en deux arbres 12a, 12b ayant leurs axes de rotation légèrement décalés l'un par rapport à l'autre, conformément à la première variante évoquée ci-dessus, le premier arbre 12a étant solidaire du châssis 2, notamment du bloc batterie 4 tandis que le second arbre 12b est solidaire d'un bras articulé 7b.

A présent, en référence aux figures 3 à 6, le dispositif de franchissement d'obstacle pour engin motorisé de l'invention est particulier en ce que les moyens moteur 5 ainsi que la roue arrière 3c dont l'axe, référencé 3c', est représenté sur lesdites figures 3 à 6, sont portés par un bras 10. A noter que les axes 3a' et 3b' des roues avant 3a et intermédiaire 3b sont également représentés.

Ledit bras 10 est articulé au châssis 2, au travers d'une liaison pivot 13, sur un longeron 14, sous la forme d'une poutre.

Une des extrémités dudit bras 10, l'extrémité référencée 11 sur les figures, qui s'étend au-delà de ladite liaison pivot 13, et du côté opposé à la solidarisation des moyens moteurs 5 et de la roue arrière 3c sur ledit bras 10, coopère avec une coulisse 15, qui est mobile sur le longeron 14.

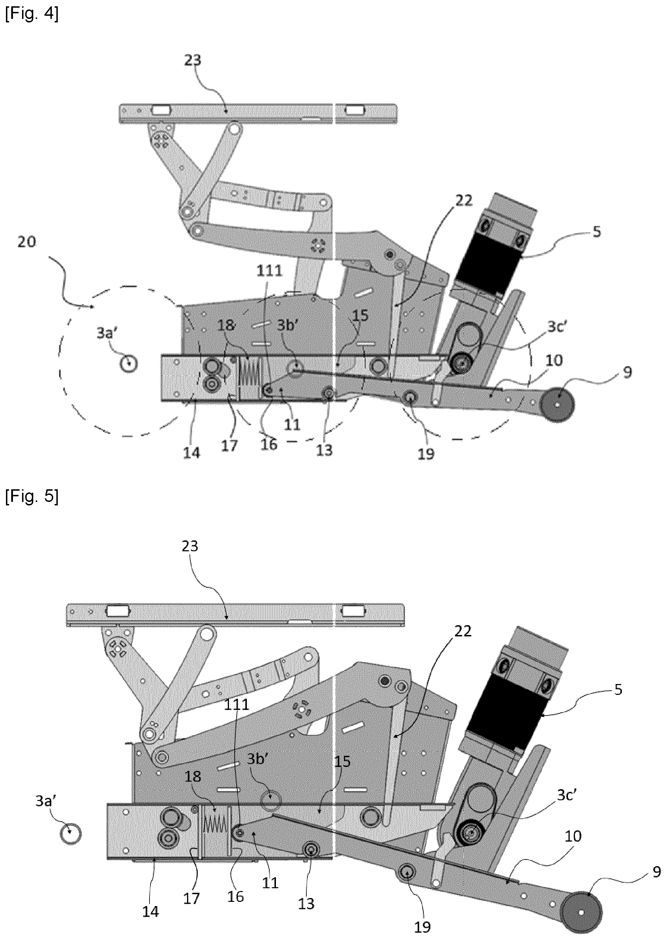

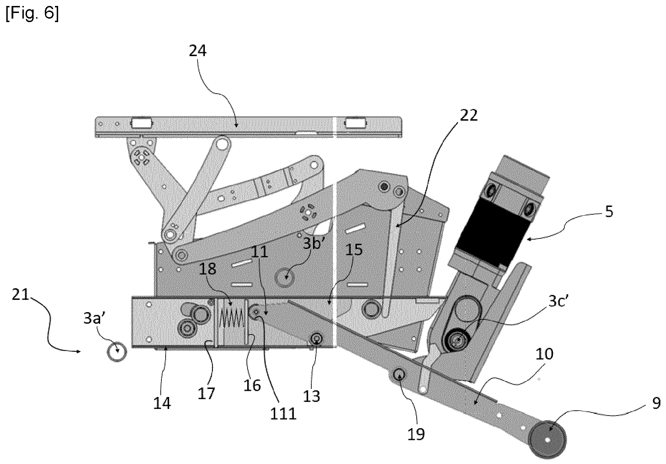

De manière particulièrement avantageuse, ladite liaison pivot 13 du bras 10 sur le longeron 14 permet de générer un déplacement de la roue avant 3a entre deux positions extrêmes que peut prendre cette dernière, à savoir :
- une première position 20, représentée sur les figures 3 et 4 ci-jointes, dans laquelle ladite roue avant 3a est dans l'alignement avec les deux autres roues intermédiaire 3b et arrière 3c ; à noter ici que l'on parle d'un alignement des trois roues 3a, 3b et 3c lorsque lesdites trois roues 3a, 3b et 3c sont sur une surface plane ;
- une seconde position 21, représentée sur la figure 6, dans laquelle ladite roue avant 3a n'est plus dans l'alignement des deux autres roues intermédiaires 3b et arrière 3c, mais est abaissée par rapport à un plan passant par l'axe 3b' et 3c' des roues intermédiaire 3b et arrière 3c.

A noter que la figure 5 illustre une position intermédiaire de la roue avant 3a, lorsque cette dernière est en train de passer de sa première position 20, dans laquelle elle est dans l'alignement avec les deux autres roues 3b et 3c, à sa seconde position 21, dans laquelle elle est abaissée par rapport aux deux roues intermédiaire 3b et arrière 3c.

En outre, ladite coulisse 15 présente une paroi 16, perpendiculaire à l'axe de coulissement, sur laquelle prend appui l'extrémité 11 du bras 10.

Le longeron 14 comporte, quant à lui, une paroi fixe 17 qui est également perpendiculaire à l'axe de coulissement.

Entre la paroi 16 de la coulisse 15 et la paroi 17 du longeron 14 est intercalé au moins un moyen ressort 18.

A noter que, de préférence, deux moyens ressorts 18 sont positionnés entre les deux parois 16 de la coulisse 15 et 17 du longeron 14 pour équilibrer la pression et assurer un parfait coulissement de la coulisse 15.

Le moyen ressort 18 entre la paroi 16 de la coulisse 15 et la paroi 17 du longeron 14 est mis sous tension lors du rapprochement desdites deux parois 16, 17 l'une de l'autre, lorsque la roue avant 3a se trouve dans sa première position 20, dans l'alignement avec les deux autres roues intermédiaire 3b et arrière 3a.

A cet effet, le bras 10 est dimensionné pour que son extrémité 11 vienne au contact de la paroi 16 de la coulisse 15, en sorte de repousser et déplacer cette dernière, en contraignant ledit au moins un moyen ressort 18.

Selon une caractéristique avantageuse du dispositif de franchissement de l'invention, l'appui du bras 10 sur la paroi 16 de la coulisse 15 s'effectue au travers d'un galet 111.

Le fait que l'extrémité 11 du bras 10 soit garnie d'un galet 111, qui roule alors sur la paroi 16 de la coulisse 15, permet d'éviter la détérioration de ladite paroi 16.

En outre, avantageusement, les moyens moteurs 5 et la roue arrière 3c sont portés par le bras 10 au travers d'une liaison pivot 19.

Le franchissement d'un obstacle, la montée d'un trottoir par exemple, se déroule de la manière suivante :
- dans un premier temps les trois roues 3a, 3b et 3c reposent au sol au pied du trottoir et sont alignées,
- lors de l'étape suivante, la roue avant 3a monte le trottoir, les roues 3a, 3b et 3c demeurant alignées sachant que la roue intermédiaire 3b est « en l'air »,
- lors de l'étape suivante, sous l'action motrice des roues avant 3a et arrière 3c, la roue intermédiaire 3b vient au contact du trottoir ce qui a pour effet un délestage qui génère, sous l'effet de la détente du moyen ressort, l'angulation relative du bras 10 par rapport au longeron 14, autour de la liaison pivot 13, et par conséquent l'élévation de la roue intermédiaire 3b, évitant ainsi qu'elle ne vienne frapper le bord du trottoir.

De manière particulièrement préférentielle, le dispositif de franchissement d'obstacle comporte également, de chaque côté latéral et à l'arrière du fauteuil 1, une roulette anti-bascule 9.

Chacune desdites roulettes anti-bascule 9 dont est muni le dispositif de l'invention est fixée à l'extrémité du bras 10 qui est opposé à l'extrémité 11 dudit bras 10 qui vient au contact de la paroi 16 de la coulisse 15.

Les roulettes anti-bascule 9 permettent également lors du franchissement d'un obstacle tel qu'un trottoir, à partir d'une certaine hauteur, une prise d'appui temporaire tant que la roue arrière 3c n'est pas entrée en contact avec le trottoir évitant ainsi qu'elle ne vienne frapper le bord du trottoir.

Le présent dispositif de franchissement d'obstacle présente également, tout préférentiellement, un dispositif mécanique de limitation du mouvement du bras 10, lors de l'élévation de l'assise 23 que comporte le fauteuil 1. Ce dispositif de limitation du mouvement du bras 10 est constitué d'une butée mobile 22 déplaçable sous l'action de l'élévation de l'assise 23.

Une telle élévation de l'assise 24 est représentée notamment sur la figure 4, laquelle illustre clairement que ladite assise 24 est surélevée par rapport à la position qu'elle occupe sur les autres figures.

Lorsque le fauteuil est en mouvement sur un terrain qui est horizontal ou sensiblement horizontal, le poids de l'ensemble (usager, fauteuil... ), vient en appui sur la roue intermédiaire 3b, les trois roues 3a, 3b et 3c sont alignées, l'extrémité 11 du bras 10 appuie sur la paroi 16, entrainant une compression du ou des moyens ressort(s) 18.

Dans cette configuration, représentée sur les figures 3 et 4 (la figure 4 illustrant une vue dans laquelle l'assise du fauteuil 1 a été remontée par rapport à la vue de la figure 3), le bras 10 portant, sur l'arrière par rapport à la liaison pivot 13, les moyens moteurs 5 et la roue arrière 3c et également, de préférence, à son extrémité arrière, la roulette antibascule 9, est aligné, ou sensiblement aligné, avec le longeron 14.

Toujours dans cette configuration, l'extrémité 11 du bras vient appuyer sur la paroi 16 de la coulisse 15 qui, par son déplacement, comprime le moyen ressort 18, ou les moyens ressorts 18 le cas échéant.

Lors du franchissement d'un obstacle, par exemple lorsque l'utilisateur du fauteuil 1 souhaite monter sur un trottoir, ou descendre d'un trottoir, le poids de l'ensemble n'est plus suffisant pour aligner les roues 3a, 3b et 3c.

En référence aux figures 5 et 6, le ressort 18 repousse alors la paroi 16 et la coulisse 15, entrainant un pivotement du bras 10 par l'intermédiaire de la liaison pivot 13, et une formation de l'angle entre les axes 3a', 3b' et 3c' des trois roues avant 3a, intermédiaire 3b, arrière 3c et un appui optimal au sol de la roue avant 3a notamment.

Lors de la descente d'un trottoir, la poussée des ressorts 18 empêche la roue arrière 3c de se soulever et évite le risque de basculement du fauteuil vers l'avant.

## Revendications

1. Dispositif de franchissement d'obstacle pour engin motorisé constitué d'un châssis (2) relié à trois roues (3a, 3b, 3c) de chaque côté latéral dudit châssis (2) et de moyens moteurs (5) aptes à faire tourner lesdites roues (3a, 3b, 3c) et, de chaque côté latéral du châssis, se trouve un mécanisme comportant deux bras (7a, 7b), articulés deux à deux autour d'un axe de pivotement commun (6), sur lesquels deux bras (7a, 7b) sont réparties les trois roues, respectivement une roue avant (3a), une roue intermédiaire (3b) et une roue arrière (3c), ledit mécanisme permettant à chaque roue de pivoter par rapport à l'axe de chaque roue adjacente, ledit dispositif étant **caractérisé en ce que** les moyens moteurs (5) et la roue arrière (3c) sont portés par un bras (10) articulé au châssis (2) sur un longeron (14) au travers d'une liaison pivot (13), l'extrémité (11) dudit bras (10) qui s'étend au-delà de la liaison pivot (13) et du côté opposé à la solidarisation des moyens moteurs (5) coopérant avec une coulisse (15) mobile sur le longeron (14), ladite liaison pivot (13) générant un déplacement de la roue avant (3a) entre deux positions extrêmes, à savoir une première position (20) dans l'alignement avec les deux autres roues (3b, 3c) et une seconde position (21) abaissée par rapport à l'alignement des deux autres roues (3b, 3c), ladite coulisse (15) comportant une paroi (16) perpendiculaire à l'axe de coulissement tandis que le longeron (14) comporte une paroi fixe (17) perpendiculaire à l'axe de coulissement (22), au moins un moyen ressort (18) étant intercalé entre lesdites deux parois (16,17), tandis que le bras (10) est dimensionné pour que son extrémité libre (11) vienne au contact de la paroi (16) en sorte de repousser la coulisse (15) tout en contraignant le moyen ressort (18) contre ladite paroi (16), lorsque ladite roue avant (3a) est dans sa première position (20) alignée avec les deux autres roues (3b, 3c).

2. Dispositif de franchissement d'obstacle pour engin motorisé selon la revendication 1 **caractérisé en ce que** l'appui du bras (10) sur la paroi (16) de la coulisse (15) se fait au travers d'un galet (111) garnissant l'extrémité (11) dudit bras (10).

3. Dispositif de franchissement d'obstacle pour engin motorisé selon la revendication 1 ou la revendication 2 **caractérisé en ce que** deux moyens ressorts (18) sont positionnés entre les parois (16, 17) de la coulisse (15).

4. Dispositif de franchissement d'obstacle pour engin motorisé selon l'une quelconque des revendications 1 à 3 **caractérisé en ce que** les moyens moteurs (5) et la roue arrière (3c) sont portés par le bras (10) au travers d'une liaison pivot (19).

5. Dispositif de franchissement d'obstacle pour engin motorisé selon l'une quelconque des revendications 1 à 4 **caractérisé en ce qu'**il comporte en outre, de chaque côté latéral, une roulette anti-bascule (9) placée à l'arrière de l'engin motorisé et fixé à la première extrémité dudit bras (10) opposée à l'extrémité (11) venant au contact de la paroi (16) de la coulisse (15).

6. Dispositif de franchissement d'obstacle pour engin motorisé selon la revendication 5 **caractérisé en ce qu'**il comporte un dispositif mécanique de limitation du mouvement du bras (10) lors de l'élévation de l'assise (23), constitué d'une butée (22) mobile sous l'action de l'élévation de l'assise (23).

7. Dispositif de franchissement d'obstacle pour engin motorisé selon l'une quelconque des revendications 1 à 6 **caractérisé en ce que** ledit châssis (2) étant relié à chaque mécanisme à bras articulés (7a, 7b) par l'intermédiaire de deux arbres (8, 12) montés libres en rotation, au moins l'un des deux arbres (12) étant apte à compenser la variation de distance entre ces deux arbres (8, 12) lorsque les bras ne sont pas alignés.

## Patentansprüche

1. Vorrichtung zum Überwinden von Hindernissen für ein motorisiertes Fahrzeug, bestehend aus einem Gestell (2), das mit drei Rädern (3a, 3b, 3c) an jeder Seite des Gestells (2) verbunden ist, und Motormitteln (5), die die Räder (3a, 3b, 3c) drehen können, und wobei sich auf jeder Seite des Gestells ein Mechanismus mit zwei Armen (7a, 7b) befindet, die paarweise um eine gemeinsame Schwenkachse (6) angelenkt sind, und wobei zwei Arme (7a, 7b) auf die drei Räder, nämlich ein Vorderrad (3a), ein Zwischenrad (3b) und ein Hinterrad (3c), verteilt sind, wobei der Mechanismus es jedem Rad ermöglicht, sich relativ zur Achse jedes benachbarten Rades zu drehen, wobei die Vorrichtung **dadurch gekennzeichnet ist, dass** die Motormittel (5) und das Hinterrad (3c) von einem Arm (10) getragen sind, der am Gestell (2) an einem Längsträger (14) über eine Schwenkverbindung (13) angelenkt ist, wobei das Ende (11) des Arms (10), das sich über die Schwenkverbindung (13) hinaus und auf der der Befestigung der Motormittel (5) gegenüberliegenden Seite erstreckt, mit einer auf dem Längsträger (14) beweglichen Führung (15) zusammenwirkt, wobei die Schwenkverbindung (13) eine Bewegung des Vorderrades (3a) zwischen zwei Endpositionen bewirkt, nämlich einer ersten Position (20) in Ausrichtung mit den beiden anderen Rädern (3b, 3c) und einer zweiten Position (21), die gegenüber der Ausrichtung der beiden anderen Räder (3b, 3c) abgesenkt ist, wobei die Führung (15) eine zur Führungsachse senkrechte Wand (16) aufweist, während der Längsträger (14) eine zur Führungsachse (22) senkrechte feste Wand (17) aufweist, wobei mindestens ein Federmittel (18) zwischen den beiden Wänden (16, 17) angeordnet ist, während der Arm (10) so bemessen ist, dass sein freies Ende (11) mit der Wand (16) in Kontakt kommt, um die Führung (15) zurückzudrücken und gleichzeitig das Federmittel (18) gegen die Wand (16) zu drücken, wenn sich das Vorderrad (3a) in seiner ersten Position (20) befindet, die mit den beiden anderen Rädern (3b, 3c) ausgerichtet ist.

2. Vorrichtung zum Überwinden von Hindernissen für ein motorisiertes Fahrzeug nach Anspruch 1, **dadurch gekennzeichnet, dass** die Abstützung des Arms (10) an der Wand (16) der Führung (15) über eine Rolle (111) erfolgt, die mit dem Ende (11) des Arms verbunden ist (10).

3. Vorrichtung zum Überwinden von Hindernissen für ein motorisiertes Fahrzeug nach Anspruch 1 oder Anspruch 2, **dadurch gekennzeichnet, dass** zwei Federmittel (18) zwischen den Wänden (16, 17) der Führung (15) positioniert sind.

4. Vorrichtung zum Überwinden von Hindernissen für ein motorisiertes Fahrzeug nach einem der Ansprüche 1 bis 3, **dadurch gekennzeichnet, dass** die Motormittel (5) und das Hinterrad (3c) durch eine Schwenkverbindung (19) am Arm (10) befestigt sind.

5. Vorrichtung zum Überwinden von Hindernissen für ein motorisiertes Fahrzeug nach einem der Ansprüche 1 bis 4, **dadurch gekennzeichnet, dass** sie ferner auf jeder Seite eine Kippschutzrolle (9) aufweist, die am Heck des motorisierten Fahrzeugs angeordnet und am ersten Ende des Arms (10) befestigt ist, das dem Ende (11) gegenüberliegt, das mit der Wand (16) der Führung (15) in Kontakt kommt.

6. Vorrichtung zum Überwinden von Hindernissen für ein motorisiertes Fahrzeug nach Anspruch 5, **dadurch gekennzeichnet, dass** sie eine mechanische Vorrichtung zur Begrenzung der Bewegung des Arms (10) beim Anheben des Sitzes (23) umfasst, die aus einem Anschlag (22) besteht, der durch das Anheben des Sitzes (23) bewegbar ist.

7. Vorrichtung zum Überwinden von Hindernissen für ein motorisiertes Fahrzeug nach einem der Ansprüche 1 bis 6, **dadurch gekennzeichnet, dass** das Gestell (2) mit jedem Gelenkarmmechanismus (7a, 7b) über zwei frei drehbare Wellen (8, 12) verbunden ist, wobei mindestens eine der beiden Wellen (12) in der Lage ist, die Abstandsänderung zwischen diesen beiden Wellen (8, 12) auszugleichen, wenn die Arme nicht ausgerichtet sind.

## Claims

1. An obstacle-crossing device for a motorized vehicle consisting of a chassis (2) connected to three wheels (3a, 3b, 3c) on each lateral side of said chassis (2) and motor means (5) adapted to rotate said wheels (3a, 3b, 3c) and, on each lateral side of the chassis, a mechanism comprising two arms (7a, 7b), articulated in pairs around a common pivot axis (6), on which two arms (7a, 7b) are distributed the three wheels, respectively a front wheel (3a), an intermediate wheel (3b) and a rear wheel (3c), said mechanism enabling each wheel to pivot with respect to the axis of each adjacent wheel, said device being **characterized in that** the motor means (5) and the rear wheel (3c) are borne by an arm (10) articulated to the chassis (2) on a longitudinal member (14) via a pivot connection (13), the end (11) of the arm (10) that extends beyond the pivot connection (13) and on the opposite side to where the motor means (5) are secured cooperating with a slide (15) which is movable on the longitudinal member (14), the pivot connection (13) causing the front wheel (3a) to move between two end positions, namely a first position (20) in alignment with the other two wheels (3b, 3c) and a second position (21) which is lowered with respect to the alignment of the other two wheels (3b, 3c), the slide (15) having a wall (16) perpendicular to the sliding axis, whereas the longitudinal member (14) has a fixed wall (17) perpendicular to the sliding axis (22), at least one spring means (18) being interposed between the two walls (16, 17), whereas the arm (10) is dimensioned such that its free end (11) comes into contact with the wall (16) so as to push back the slide (15) while constraining the spring means (18) against the wall (16) when the front wheel (3a) is in its first position (20) aligned with the other two wheels (3b, 3c).

2. The obstacle-crossing device for a motorized vehicle according to claim 1, **characterized in that** the arm (10) bears on the wall (16) of the slide (15) via a roller (111) on the end (11) of said arm (10).

3. The obstacle-crossing device for a motorized vehicle according to claim 1 or claim 2, **characterized in that** two spring means (18) are positioned between the walls (16, 17) of the slide (15).

4. The obstacle-crossing device for a motorized vehicle according to any one of claims 1 to 3, **characterized in that** the motor means (5) and the rear wheel (3c) are borne by the arm (10) via a pivot connection (19).

5. The obstacle-crossing device for a motorized vehicle according to any one of claims 1 to 4, **characterized in that** it further comprises, on each lateral side, an anti-tilt roller (9) placed at the rear of the motorized vehicle and fixed to the first end of said arm (10) opposite the end (11) coming into contact with the wall (16) of the slide (15).

6. The obstacle-crossing device for a motorized vehicle according to claim 5, **characterized in that** it comprises a mechanical device for limiting the movement of the arm (10) when the seat (23) is raised, consisting of a stop (22) that can be moved under the action of raising the seat (23).

7. The obstacle-crossing device for a motorized vehicle according to any one of claims 1 to 6, **characterized in that** said chassis (2) is connected to each articulated arm mechanism (7a, 7b) by means of two freely rotating shafts (8, 12), at least one of the two shafts (12) being able to compensate for the variation in distance between these two shafts (8, 12) when the arms are not aligned.
